Europäisches Patentamt

(19) European Patent Office

Office européen des brevets

(11) Numéro de publication: **0 263 007**
A1

(12) # DEMANDE DE BREVET EUROPEEN

(21) Numéro de dépôt: 87402034.0

(51) Int. Cl.⁴: **B 60 S 1/02**

(22) Date de dépôt: 14.09.87

---

(30) Priorité: **29.09.86 FR 8613654**

(43) Date de publication de la demande:
**06.04.88 Bulletin 88/14**

(84) Etats contractants désignés: **DE GB SE**

(71) Demandeur: **Delluc, René
74 bis, boulevard Gambetta
F-06000 Nice (FR)**

(72) Inventeur: **Delluc, René
74 bis, boulevard Gambetta
F-06000 Nice (FR)**

(74) Mandataire: **Sauvage, Renée
CABINET SAUVAGE 100 bis, avenue de Saint-Mandé
F-75012 Paris (FR)**

---

(54) **Dispositif de lavage et de dégivrage des pare-brise de véhicules automobiles.**

(57) Pour assurer un dégivrage satisfaisant, sans provoquer d'usure intempestive des raclettes à double lames (4, 5) en élastomère, l'invention prévoit, tout d'abord, de décoller les lames (4, 5) de la couche de glace en insufflant de l'air chaud dans le canal (6) compris entre lesdites lames (4, 5), puis de soulever l'arbre de pivotement (24) du porte-balai (71), et donc les lames (4, 5), en exerçant une poussée axiale sur cet arbre (24), au moyen du piston (27) d'un vérin (86) tout en conservant le parallélisme entre les lames (4, 5) et le pare-brise. La connexion bloquée en rotation, mais libre en coulissement axial, entre l'arbre (24) et la bielle d'entraînement (29) permet de faire pivoter l'arbre aussi bien en position soulevée, avec balayage de la glace par un courant d'air chaud depuis l'essuie-glace écarté du pare-brise, qu'en position abaissée avec appui des lames (4, 5) sur le pare-brise.

Le dispositif comporte un ensemble d'alimentation en liquide de lavage (76, 90, 15, 78, 79, 1, 3, 92) et en air chaud (80, 17, 18, 16, 22, 13, 14, 23) et un circuit électronique de commande (fig. 17, fig. 18) du moteur (12) de la turbine (13), de l'électro-aimant (20) du tiroir (18), du moteur (91) de la pompe (20) et du moteur (86) d'essuyage.

FIG14

**Description**

Dispositif de lavage et de dégivrage des pare-brise de véhicules automobiles.

La présente invention concerne principalement un dispositif de dégivrage des pare-brise de véhicules automobiles du type comportant :
- au moins un essuie-glace constitué d'un porte-balai et d'un balai, ledit porte-balai étant monté, à l'une de ses extrémités, sur un arbre de pivotement situé au voisinage de la partie inférieure du pare-brise et susceptible d'être animé d'un mouvement de pivotement alternatif, et ledit balai étant garni d'une raclette portant une paire de lames en un matériau élastomère, formant avec leur support, les parois en U d'un canal ouvert vers le pare-brise,
- un ensemble d'alimentation en air comprenant une turbine aspirant de l'air depuis au moins un point d'extraction et le soufflant dans un conduit qui débouche entre la paire de lames au voisinage de l'extrémité de plus grande course dudit balai, et
- des moyens adaptés à écarter lesdites lames du pare-brise.

Les moyens de dégivrage mis en oeuvre dans les véhicules actuellement commercialisés ne donnent pas satisfaction.

En effet, pour enlever la couche de glace qui se dépose les nuits de grands froids sur le pare-brise des véhicules ayant stationné dehors, l'usager en est réduit soit à attendre que l'air de climatisation de l'habitacle du véhicule soit assez chaud pour provoquer la fonte de la glace par réchauffement depuis la face intérieure du pare-brise - ce qui est généralement très long - soit à agir directement sur la glace, c'est-à-dire depuis l'extérieur du véhicle, dans des conditions très inconfortables et avec des moyens souvent rudimentaires.

Des solutions ont été proposées pour tenter d'améliorer cette situation.

Ainsi, le document US-A-3.366.336 propose de prélever de l'air chaud auprès des tuyaux évacuant les gaz de combustion du moteur et d'envoyer cet air à des diffuseurs placés au bas du pare-brise. Cependant, en raison de l'inclinaison de la quasi-totalité des pare-brise modernes et de la tendance de l'air chaud à s'élever dans une atmopshère froide, la plus grande partie de cet air s'échappe verticalement et ne peut provoquer que la fusion de la glace se trouvant dans la zone immédiatement voisine des diffuseurs.

Les documents GB-A-402.189 et US-A-3.447.186 proposent, de leur côté, d'envoyer de l'air chaud dans des canalisations rigides constituant les bras qui supportent des balais d'essuie-glace et de faire sortir cet air par des orifices multiples disposés sur la longueur des balais ; cette structure permet certes de libérer les lames éventuellement collées au pare-brise par de la glace et de balayer le pare-brise d'un courant d'air chaud, grâce au mouvement alternatif des essuie-glace, mais l'inconvénient est que, ce faisant, les lames en élastomère frottent sur les cristaux de glace et qu'il s'ensuit nécessairement une usure très rapide de leur arête ; au surplus, les canalisations rigides empêchent très certainement les lames en élastomère d'assurer correctement leur fonction d'essuyage par défaut d'adaptation aux courbures du pare-brise.

L'usure intempestive des lames pourrait être évitée en écartant lesdites lames du pare-brise avant de déclencher le pivotement alternatif du porte-balai.

Un tel soulèvement des lames est proposé par le document JP-A-060-185.668. Il s'agit cependant d'un soulèvement par basculement autour du pivot du porte-balai, qui aboutit à donner au balai une position angulaire telle, par rapport au pare-brise, que l'extrémité du balai opposée au pivot est très sensiblement éloignée du pare-brise. Ce brevet ne décrit ni ne suggère que le soulèvement des balais est déclenché dans le cadre d'une opération de dégivrage avec insufflation d'air chaud. En tout état de cause, un tel soulèvement serait impropre à obtenir un dégivrage correct compte-tenu de l'éloignement entre le pare-brise et l'extrémité des lames opposée au pivot.

La présente invention a pour but d'apporter un nouveau dispositif qui élimine les inconvénients évoqués ci-dessus.

Ce but est atteint en ce sens que, dans le dispositif selon l'invention, les moyens adaptés à écarter les lames du pare-brise agissent par poussée axiale sur l'arbre de pivotement du porte-balai, ledit arbre étant ainsi déplaçable entre une position abaissée pour laquelle lesdites lames reposent sur le pare-brise et une position relevée pour laquelle lesdites lames sont écartées du pare-brise en conservant leur orientation sensiblement parallèle audit pare-brise.

Grâce à cette disposition, l'air chaud qui est injecté dans le canal défini par les lames, depuis l'extrémité de plus grande course du balai, balaie le pare-brise tandis que l'essuie-glace est écarté du pare-brise, mais parallèle à ce dernier, et animé de son mouvement alternatif.

D'une manière connue en soi, le mouvement de pivotement alternatif est transmis à l'arbre de pivotement du porte-balai par l'intermédiaire d'une bielle réunie à un arbre moteur et, dans une forme d'exécution pratique de l'invention, l'extrémité de ladite bielle opposée à l'arbre moteur forme une bague dans laquelle est enfilé l'arbre de pivotement, la périphérie interne de la bague et la périphérie externe dudit arbre présentant chacune au moins une portion de surface non circulaire et complémentaire assurant un blocage en rotation de l'arbre par rapport à la bielle tout en autorisant un coulissement axial entre eux.

Ces surfaces non circulaires et complémentaires peuvent être constituées, par exemple, par des canelures, des méplats, ou autres.

Le dispositif selon l'invention incorpore également, de préférence, des moyens améliorant la qualité du lavage susceptible d'être obtenu à l'aide du balai d'essuie-glace.

A cet effet, il est prévu, d'une manière connue en soi, un ensemble d'alimentation en liquide de lavage comprenant un réservoir de liquide et une pompe reliée fonctionnellement audit réservoir et à un conduit débouchant dans le canal défini entre les lames de l'essuie-glace.

Les documents FR-A-2.329.481 et JP-A-60-183.250 décrivent des essuie-glace de ce type.

Cependant, dans le cas du brevet français, le liquide de lavage est injecté dans le canal depuis son extrémité inférieure, ce qui - à moins de soumettre le liquide à une très forte pression - ne peut conduire à une répartition convenable du liquide jusqu'à l'autre extrémité du canal. La qualité du lavage dans la partie haute du pare-brise ne peut donc être satisfaisante.

Dans le cas du brevet japonais, l'injection se fait au contraire par l'extrémité supérieure de canal, mais aucun moyen n'est prévu pour assurer que du liquide de lavage ne va pas s'échapper par cette extrémité supérieure, qui est ouverte, et se répandre sur la surface nettoyée.

Selon l'invention, le conduit d'injection du liquide de lavage est le même que celui qui appartient à l'ensemble d'alimentation en air, de sorte qu'il a une fonction mixte.

Pour remédier aux inconvénients des dispositifs proposés par l'art antérieur évoqué ci-dessus :
- l'extrémité de plus grande course du balai est munie d'un embout réuni, d'une part, audit conduit et, d'autre part, audit canal,
- le conduit communique avec le canal par un passage coudé inversant la direction d'acheminement du liquide de lavage ou de l'aire, lequel passage débouche par un orifice sur la face inférieure de l'embout,
- ladite face inférieure est munie d'une paire de lamelles disposées en un V dont la pointe est située au voisinage immédiat dudit orifice, à l'opposé dudit canal et
- lesdites lamelles sont susceptibles d'être engagées et immobilisées de manière étanche entre les lames définissant le canal.

Grâce à ces dispositions, d'une part, le liquide de lavage, est contraint de s'écouler depuis l'extrémité supérieure du canal ves le bas de celui-ci, sans fuite par le haut au niveau de l'extrémité de plus grande course du balai et, d'autre part, la double connexion du conduit
- alimentation en liquide de lavage , alimentation en air -permet de lui faire remplir quatre fonctions (1) lavage du pare-brise, (2) expulsion, après lavage, du liquide de lavage résiduel par soufflage d'air, (3) désembuage du pare-brise par soufflage d'air tiède et (4) décollage des lames de raclette lorsqu'elles sont immobilisées par de la glace puis dégivrage du pare-brise par soufflage d'air très chaud.

Selon l'invention, il est prévu deux points d'extraction d'air différents afin de pouvoir choisir la température de l'air extrait en fonction du but poursuivi. On comprendra, en effet, que s'il est souhaitable que de l'air très chaud soit envoyé dans le canal pour décoller les lames immobilisées par de la glace et pour dégrivrer le pare-brise, il n'est cependant pas recommandé, pour la bonne conservation du matériau élastomère de ces dernières, de les soumettre plus souvent qu'il est nécessaire à des températures élevées. Un air seulement tiède sera suffisant pour désembuer le pare-brise ou pour chasser du conduit le liquide de lavage résiduel.

En conséequence, selon l'invention, la turbine de l'ensemble d'alimentation en air est susceptible d'être reliée :
- soit à un "premier" point d'extraction situé hors du voisinage immédiat du moteur du véhicule,
- soit à un "second" point d'extraction appartenant à des moyens de traitement thermique, situés près ou des tuyeaux d'évacuation des gaz de combustion du moteur du véhicule, lesquels moyens thermique communiquent, d'une part, avec le milieu ambiant au voisinage immédiat du moteur et, d'autre part, avec la turbine,
- doit simultanément aux premier et second points d'extraction dans un rapport prédéteminé,
le choix entre ces possibilités étant effectué au moyen d'un sélecteur constitué par un distributeur à tiroir, commandé par un électro-aimant, et mettant en relation ladite turbine soit avec le premier point d'extraction (81), soit avec le second, soit avec les deux dans des rapports prédéterminés.

L'invention trouve son maximum d'intérêt lorsqu'elle comporte des moyens rendant automatique l'enchaînement d'opérations donnant un dégivrage, un lavage ou un désembuage optimal.

A cet effet, le dispositif comporte un montage électronique comprenant un circuit temporisateur et commandant, lorsque l'usager déclenche le dégivrage du pare-brise, l'excitation de l'électro-aimant du distributeur à tiroir pour obtenir une mise en relation de la turbine de l'ensemble d'alimentation en air un moins principalement avec le second point d'extraction l'actionnement de ladite turbine, puis après en temps de latence réglé par ledit circuit temporisateur, l'actionnement du vérin de soulèvement du porte-balai et la mise en marche du moteur assurant son pivotement alternatif.

Le montage électronique comprend avantageusement, en outre, un circuit temporisateur commandant, lorsque l'usager déclenche le lavage du pare-brise, d'une part, l'actionnement de la pompe de l'emsemble d'alimentation en liquide de lavage, avec pour conséquence l'injection dudit liquide dans ledit canal via ledit conduit et, d'autre part, la mise en marche du moteur provoquant le mouvement de pivotement alternatif du porte-balai puis, lorsque l'usager interrompt l'opération de lavage, outre l'arrêt de la pompe, d'une part, l'actionnement automatique, et pendant un temps prédéterminé, de la turbine de l'ensemble d'alimentation en air, reliée au moins principalement au premier point d'extraction avec pour conséquence la vidange totale dudit conduit et, d'autre part, après un temps de latence réglé par le circuit temporisateur, l'arrêt du moteur assurant le mouvement de pivotement alternatif dudit porte-balai.

Enfin, pour le désembuage, le montage électronique commande l'actionnement de la turbine de l'ensemble d'alimentation, reliée au moins principalement au premier point d'extraction, et le pivotement alternatif du porte-balai.

L'invention sera mieux comprise à la lecture de la description suivante faite en référence aux dessins annexés dans lesquels :

- la figure 1 représente, de profil, un essuie-glace selon l'invention, comportant une raclette montée sur le bras d'un porte-balai,

- les figures 2, 3 et 4 sont des coupes transversales, à plus grande échelle, de la raclette de la figure 1, respectivement en position de repos, et pendant ses mouvement de va-et-vient, et la figure 5 est une vue similaire, à plus grande échelle encore, faisant ressortir les particularités de comportement des lames,

- les figures 6 et 7 montrent, respecivement, les moyens de raccordement mutuel entre l'embout équipant l'extrémité de plus grande course du porte-balai et la raclette,

- la figure 8 est une vue du dessous de l'embout et de la raclette mutuellement raccordés,

- la figure 9 montre les ensembles d'alimentation en liquide de lavage et en air,

- la figure 10 est une vue de détail montrant le branchement de l'aspiration sur le second point d'extraction d'air (air très chaud) et les moyens de traitement thermiques de cet air,

- les figures 11a et 11b sont respectivement des vues en bout et de profil du piston du dispositif à tiroir sélectionnant le point principal d'extraction d'air,

- la figure 12 illustre, en vue de profil, le soufflage d'air très chaud sur le pare-brise,

- les figures 13a et 13b montrent respectivement le soufflage d'air très chaud sur les vitres des portières du véhicules au moyen d'un gicleur approprié et, en coupe, à plus grande échelle, le gicleur en question,

- la figure 14 montre, en coupe, l'assemblage du vérin de soulèvement du porte-balai avec les particularités de l'arbre de pivotement de ce dernier,

- la figure 15 montre le détail des moyens de connexion entre l'arbre de pivotement de la figure 14 et une bielle d'entraînement accouplée à la timonerie du moteur actionnant les porte-balai,

- la figure 16 représente schématiquement le goupe de pompage fournissant le fluide de pression au vérin de soulèvement du porte-balai,

- la figure 17 représente le montage électronique provoquant l'envoi automatique d'air dans le conduit après chaque opération de lavage, et

- la figure 18 représente le montage électronique réglant les opérations de dégivrage.

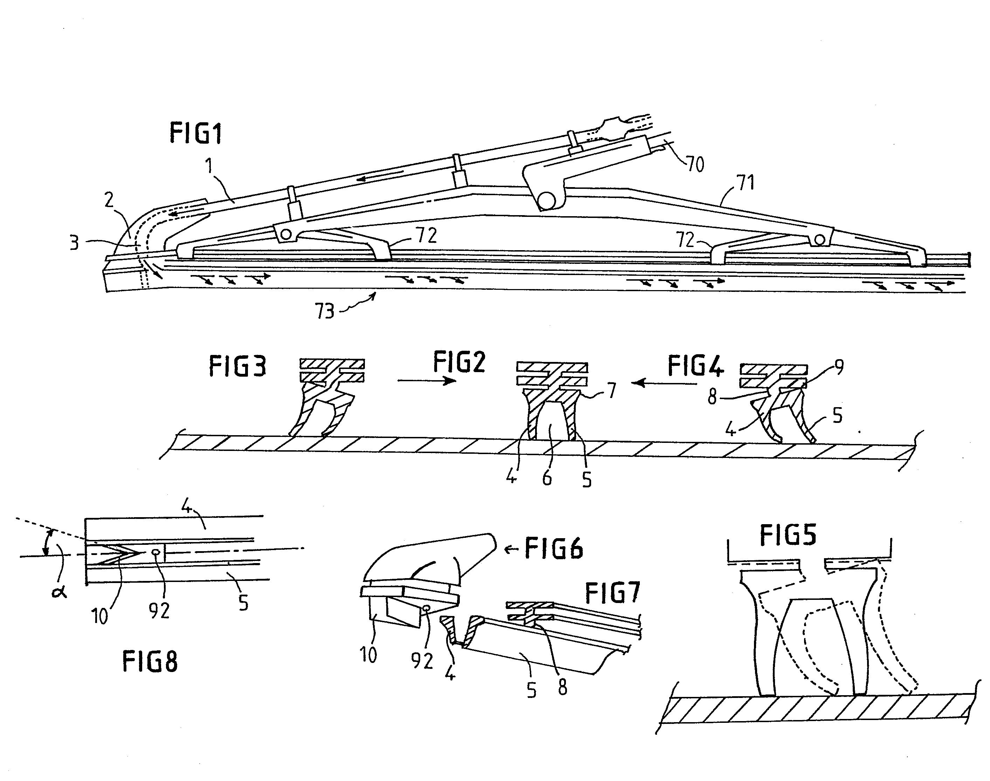

La figure 1 montre un essuie-glace comprenant un bras 70 auquel est fixé un porte-balai 71 supportant, par l'intermédiaires d'étriers 72, un balai 73 muni d'une raclette à deux lames.

Le dispositif de lavage et de dégivrage selon l'invention comporte, ainsi qu'il ressort de cette même figure 1, un conduit flexible 1 provenant de l'enceinte du moteur, lequel conduit est fixé sur le dos du porte-balai 71 et sur les étriers 72. Ce conduit 1 est susceptible d'amener un liquide de lavage ou de l'air à un ambout 2 placé à l'extrémité de plus grande course du balai 73 et dans lequel est ménagé un passage 3 prolongeant le conduit 1 et formant un coude qui inverse le sens de circulation du fluide.

La raclette en élastomère équipant le balai 73 a, comme il ressort des figures 2 à 5, une forme particulière.

Vue en coupe, cette raclette présente un profil où apparaissent deux lames 4 et 5 laissant jentre elles un espace qui constitue un canal 6, lequel a la forme d'un U ouvert vers le pare-brise.

Les deux lames 4 et 5 sont d'un seul tenant à leurs parties supérieures avec un plateau de basculement 7 qui leur est commun et qui oscille autour d'un pivot 8 également commun aux deux lames.

Cette structure place la totalité de la section du canal (6) au plus près de la surface vitrée, forçant ainsi le liquide de lavage à un contact permanent avec le pare-brise, tandis que le pivot 8 donne aux lames 4 et 5 l'inclinaison nécessaire pour que celles-ci assurent, dans de bonnes conditions, l'essuyage du liquide et le raclage des salissures.

Lorsque le liquide de lavage débouche du passage 3 ménagé dans l'embout 2 pour s'engager dans le canal 6, il importe qu'il ne puisse pas remonter ce canal pour s'échapper par le haut du balai 73 d'où il se répandrait sur toute la surface du pare-brise, y compris sur celle qui vient d'être nettoyée.

A cet effet, comme on le voit aux figures 1, 6, 7 et 8, l'embout 2 est muni, sur sa face inférieure, de deux lamelles 10 disposées obliquement et réunies en une extrémité située près de l'orifice 92 du passage 3.

Ces deux lamelles 10 viennent se loger entre les lames 4 et 5 auxquelles elles sont réunies de façon étanche pour former une cloison en partie haute du canal, comme cela ressort des figures 6 et 7.

La longueur de ces lamelles 10 est établie de façon que chacune d'elles soit orientée selon un angle $\alpha$ de faible ouverture avec l'axe médian de la raclette (figure 8), cela afin que, pendant les mouvements du balai, la flexion de ces lamelles 10 s'opère au maximum dans leur sens latéral.

Le dispositif selon l'invention comporte un ensemble d'alimentation en air, ou soufflerie, destiné principalement à fournir de l'air chaud pour le dégivrage et le désembuage, mais qui trouve également son utilité pour améliorer les opérations de lavage.

En effet, dans ce procédé, il est préférable, pendant les saisons froides, que du liquide de lavage résiduel ne séjourne pas dans les conduits extérieurs, surtout s'il n'a pas été additionné de produit antigel.

L'intervention automatique de la soufflerie, commandée par circuit électronique pour un fonctionnement bref après chaque lavage, apporte une solution à ce problème, en chassant à chaque fois ce liquide résiduel.

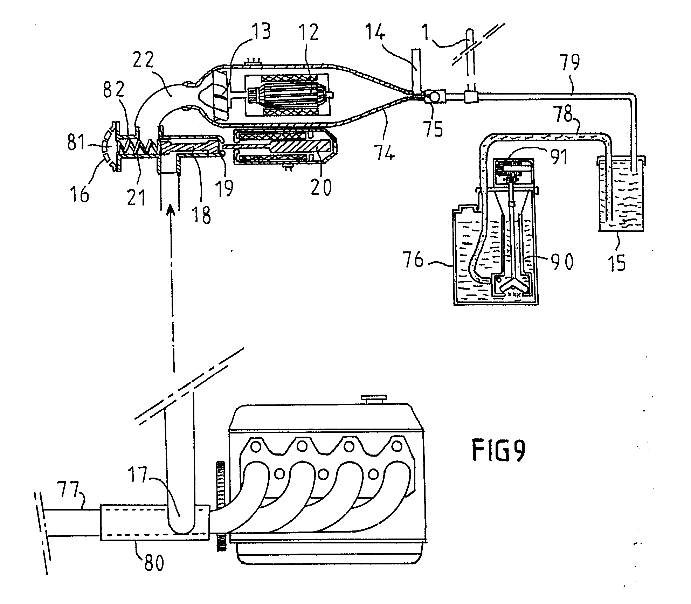

Cette soufflerie, qui est représentée à la figure 9, comprend un moteur électrique à deux vitesses 12 entraînant une turbine 13 qui peut être du type à compression centrifuge, ou du type à souffle axial. Cette turbine dirige l'air vers une buse 74 qui comprime légèrement cet air avant de l'envoyer dans le conduit 1 et, par conséquent, le canal 6.

La figure 9 montre en outre l'alimentation en liquide de lavage de l'essuie-glace. Cette alimentation comprend un reservoir de liquide 76 équipé d'une pompe classique 90 et un syphon 15 communiqant entre eux par un tube 78. Le syphon 15 est réuni au conduit 1 par un tube 79.

Un clapet anti-retour 75 est placé entre le conduit 1 et la buse 74 pour empêcher que du liquide puisse pénétrer dans la zone de la turbine 13.

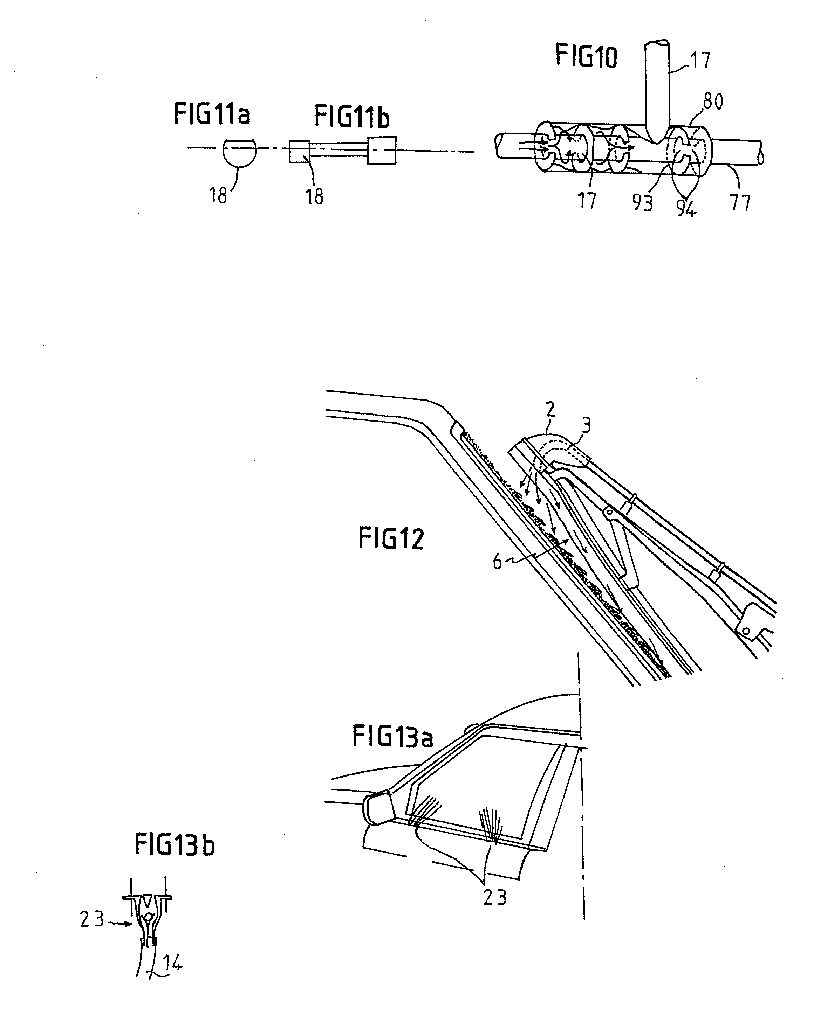

Il est éventuellement prévu une conduite 14, branchée avant le clapet anti-retour 75, pour prélever une partie de l'air provenant de la soufflerie et pour l'envoyer à des gicleurs de portière 23 placés au bas des vitres, comme il sera expliqué plus loin (figures 13a et 13b).

La soufflerie est alimentée en air par une prise d'air 81 garnie d'un filtre 16 et constituant le premier point d'extraction, hors du voisinage immédiat du moteur.

Pour le dégivrage, où il est nécessaire de souffler de l'air chaud ou très chaud, celui-ci est prélevé au voisinage du ou des tuyaux, ou collecteur 77, évacuant les gaz de combustion du moteur ; ces gaz dont la température avoisine 2000° C, provoquent un réchauffement rapide de ce collecteur. L'extraction se fait au niveau d'un conduit 17 terminé par un manchon 80 (figures 9 et 10) entourant ce collecteur et comportant intérieurement des cloisons 93 pourvues d'orifices 94 disposés en chicane qui force l'air aspiré à une circulation enveloppante autour du collecteur chaud 77 et à un contact prolongé avec ce dernier, ce qui permet un réchauffement intensif de l'air, malgré son temps de séjour relativement très bref dans le manchon. Le manchon 80 constitue le second point d'extraction.

Le choix du point d'extraction de l'air est opéré automatiquement par un tiroir 18 (figures 9 et 11) qui se meut à l'intérieur d'un cylindre 19 ouvert sur trois conduits, à savoir (1) un conduit 22 qui va vers la soufflerie, (2) un conduit 32) qui débouche à l'extérieur par la prise d'air 81 garnie du filtre 16 et (3) le conduit 17 allant au manchon de rechauffage 80.

Le tiroir 18 est piloté par un électro-aminant 20 et un ressort 21. En position de repos, ce tiroir met en communication le conduit 22 principalement avec le conduit 82, tandis que lorsqu'il est poussé par l'électro-aimant 20, il met le conduit 22 principalement en communication avec le conduit 17.

Le piston de ce tiroir 18, situé du côté des trois conduits 82, 22 et 17 a, comme on le voit à la figure 11, une section transversale en portion de disque, de sorte qu'il laisse subsister une communication partielle entre les conduits que ce tiroir sélectionne. Il en résulte, par exemple, qu'en position de repos, l'air aspiré au travers du filtre 16 se trouve mélangé à, et donc réchauffé par, une petite quantité d'air très chaud qui provient du conduit 17 et passe au travers de cette communication partielle. Un tel air légèrement réchauffé sera utilisé pour chasser le liquide de lavage résiduel et pour désembuer rapidement le pare-brise.

Pour l'opération de dégivrage, c'est l'inverse qui se produit et la majeure partie de l'air extrait est de l'air très chaud. En effet, quand l'opérateur déclenche l'opération de dégivrage, l'électro-aimant 20, commandé par un circuit électronique, est mis sous tension simultanément avec le moteur de la soufflerie, lequel est alors commandé pour sa plus grande vitesse de rotation afin que cet air très chaud soit soufflé avec une certaine pression.

La figure 12, qui représente la partie haute d'un essuie-glace selon l'invention pendant une opération de dégivrage, c'est-à-dire soulevé - comme cela sera expliqué plus loin - et soufflant cet air chaud, montre que cet air agit à la fois par son action physique de réchauffement de la glace et par son action mécanique en repoussant les gouttes en fusion sur les zones encores gelées. L'orientation du jet et la structure de la raclette forcent une partie de cet air à suivre le canal 6 pour aller porter ses effets jusqu'à une zone éloignée du sommet du balai.

Les figures 13a et 13b montrent comment peut s'opérer le dégivrage et le désembuage des vitres des portières, en y plaçant des gicleurs 23 incorporés dans les portières et alimentés en air chaud par le conduit 14. La disposition de ces vitres dans un plan proche du plan vertical permet à l'air chaud ascendant d'avoir un contact étendu avec ces vitres et la glace qui les recouvre.

Ainsi qu'il a déjà été dit, le dispositif selon l'invention permet aussi d'obtenir un désembuage accéléré du pare-brise sans admettre d'air chaud dans l'habitacle du véhicule.

Pour enlever la buée, le procédé habituel consiste à faire souffler de l'air chaud sur la face interne du pare-brise, mais cet air étant réchauffé par le circuit de climatisation, qui lui-même ne monte en température qu'après une longue période de marche du moteur, ce désembuage n'est réalisé de façon complète qu'après un temps assez long.

Le présent dispositif permet d'accélérer ce résultat en soufflant, sur la face extérieure du pare-brise, de l'air chaud qui, comme on l'a vu plus haut, est prélevé en partie près du collecteur d'échappement et donc réchauffé plus vite que celui du circuit de climatisation. En outre, cet air ne peut incommoder les passagers par d'éventuelles mauvaises odeurs.

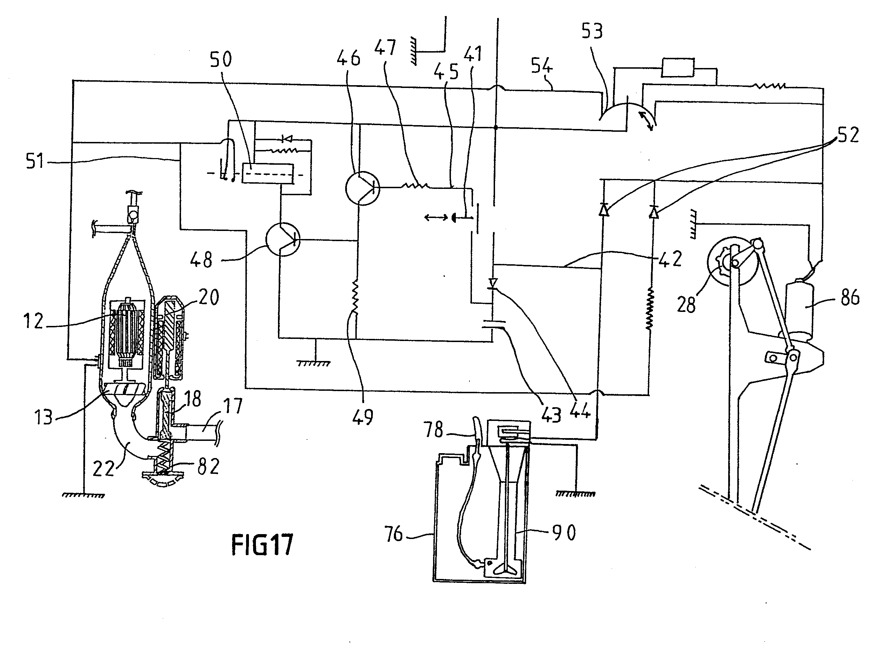

Dans le montage représenté à la figure 17 qui sera décrite en détail plus loin, un contact 53 et une ligne supplémentaire 54 provoquent l'action de la soufflerie en même temps que le mouvement des balais pour accélerer ce désembuage ou le combiner avec l'essuyage d'une eau de pluie.

Une des fonctions les plus importantes du dispositif selon l'invention est de permettre le dégivrage automatique du pare-brise.

Cette fonction est mise en oeuvre par la soufflerie déjà décrite, un mécanisme qui soulève les balais, selon un plan parallèle au pare-brise, après que les lames aient été décollées de la couche de glace qui les immobilise, et un montage électronique réglant les opérations de façon automatique.

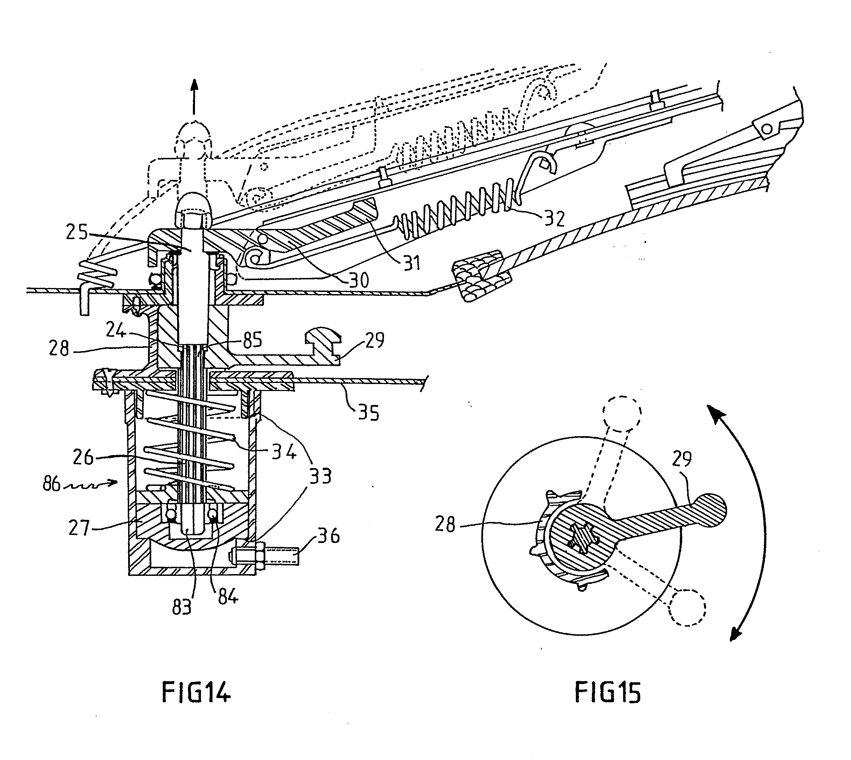

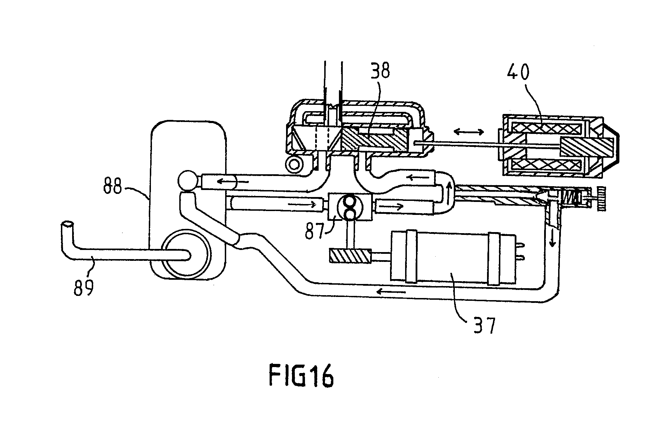

A cet effet, comme il ressort de la figure 14, l'arbre de rotation 24 de chaque porte-balai est assujetti au piston 27 d'un vérin 86 poussé par un fluide provenant d'un ensemble de pompage. Plus précisément, l'arbre de rotation 24 est formé d'une partie supérieure à périphérie lisse 25 et d'une partie inférieure à périphérie cannelée en creux 26 qui se termine par une autre partie cylindrique 83, laquelle est insérée dans un roulement à billes 84 solidaire du piston 27. La partie canelée 26 de l'arbre 24 peut coulisser dans une bague dont la périphérie interne est canelée de manière correspondante et qui constitue la tête d'une bielle 29. Cette bague est elle-même mobile à l'intérieur d'une douille 28 qui, comme on le voit à la figure 15, présente une découpe semi-circulaire, permettant à la bielle 29 son mouvement de va-et-vient angulaire pour l'entraînement du porte-balai.

Tout comme dans les systèmes actuellement en usage, l'arbre 24 porte, à son extrémité supérieure, un chevalet 30 auquel le porte-balai est fixé, ainsi qu'un ressort de traction 32 qui appuie le balai sur le pare-brise. Ce chevalet 30, sans avoir de forme spéciale, est plus grand que ceux normalement utilisés afin d'assurer un bon soulèvement des balais.

L'arbre 24, assujetti au piston 27, peut se déplacer verticalement sur une longueur déterminée par la distance séparant deux butées 33 supérieure et inférieure, limitant le déplacement du piston.

Un ressort 34 exerce une pression sur le piston 27, même lorsque celui-ci est en position basse, provoquant une traction permanente sur l'arbre de rotation 24, ce qui assure une application ferme du balai sur le pare-brise pour les opérations d'essuyage et de lavage.

Le corps du vérin 86 est fixé sur la douille 28 et sur l'extrémité d'une platine 35 qui maintient l'écartement de la timonerie du mécanisme d'entraînement des balais.

Ce vérin 86 reçoit par un conduit 36 le liquide de pression provenant d'un système de pompage.

C'est en effet, de préférence, par un système hydraulique que la pression est fournie au vérin 86. Ce procédé, outre sa facilité de régulation de la pression, permet de placer le groupe de pompage en un endroit éloigné du vérin 86, et donc logé facilement dans l'enceinte du moteur.

La centrale hydraulique illustrée à la figure 16 est d'un type connu. Elle comprend un moteur électrique 37 qui entraîne une pompe 87, laquelle peut être à engrenages ou être une pompe volumétrique à palettes ou d'un autre modèle, étant donné que la pression qu'elle doit fournir est faible.

Cette pompe 87 aspire le liquide contenu dans un réservoir 88 et l'envoie dans un distributeur é tiroir 38, lequel est piloté pr un électro-aimant 40 mis en action simultanément avec le moteur 37. Si le liquide de pression utilisé est de l'huile dont la viscosité augmente avec le froid, le réservoir 88 est relié à la soufflerie par un conduit 89 qui apporte de l'air chaud sur cette huile avant et pendant son utilisation.

Ce groupe de pompage est commandé, comme expliqué plus loin, par un montage électronique, avec temporisation à sa mise sous tension.

Ainsi qu'il a été dit, les cycles d'opérations de lavage et de dégivrage sont réglés par des circuits électroniques.

Deux circuits principaux contrôlent les opérations :

Le lavage, comme habituellement, s'opère par l'envoi d'un courant de liquide de lavage propulsé par la pompe 90, cette manoeuvre étant commandée par le conducteur. Dès la cessation de cette commande, la pompe s'arrête et la soufflerie est automatiquement mise en action pour un temps relativement bref, envoyant de l'air qui chasse le liquide résiduel contenu dans le conduit 1 et le canal 6. Après un temps prédéterminé, la soufflerie s'arrête à son tour, ainsi que le mouvement alternatif des balais.

Pour obtenir ce résultat, on utilise un montage électronique tel que représenté à la figure 17. Ce montage est composé d'un contacteur à bouton poussoir 41 qui, lorsqu'il est poussé, met en communication la source de courant (ici positive) avec le circuit direct 42, lequel alimente alors simultanément le moteur 91 actionnant la pompe à eau 90 et celui entraînant les balais. La même commande provoque la charge du condensateur 43 au travers de la diode 44.

Quand le contacteur 41 est relâché et retourne à la position de repos, il met le condensateur 43 en communication avec un circuit secondaire 45 qui alimente la base d'un transistor 46 par l'intermédiaire d'une résistance 47.

Ce transistor 46, relié par son collecteur au circuit d'alimentation, devient alors conducteur et cette conduction sera maintenue pendant une durée qui dépend du rapport des valeurs entre le condensateur 43 et la résistance 47, rapport fixant le temps de décharge du condensateur.

Le transistor 46 est couplé à un autre transistor 48 selon le montge connu sous le nom de "Darlington" de sorte que le courant amplifié débité dans l'émetteur du transistor 46, mais limité par une résistance 49, va alimenter la base du transistor 48 lequel, à son tour, va devenir conducteur. Le collecteur de ce transistor 48 est relié au circuit d'alimentation par l'intermédiaire de l'enroulement d'un relais 50 qui enclenche alors son contact "travail", mettant en circuit le moteur de la soufflerie et, par un circuit dérivé 51, continue à alimenter le moteur d'entraînement des balais.

Le relais 50 est équipé d'une diode empêchant le contre-courant selfique et le montage est complété par des résistances de stabilisation telle que la résistance 40 déjà citée qui empêchent le courant de fuite résiduel du transistor 46 d'amplifier celui du transistor 48, ainsi que par des diodes 52 empêchant la soufflerie et la pompe à eau d'être mise en action en même temps.

L'ensemble de l'opération de lavage suivie du soufflage s'arrête quand le condensateur 43 est déchargé.

Comme cela a déjà été dit, le contacteur 53, ajouté au sélecteur de vitesses réglant le mouvement des balais, et une ligne électrique supplémentaire 54 permettent d'actionner simultanément la soufflerie et le moteur des balais afin d'obtenir un désembuage accéléré du pare-brise.

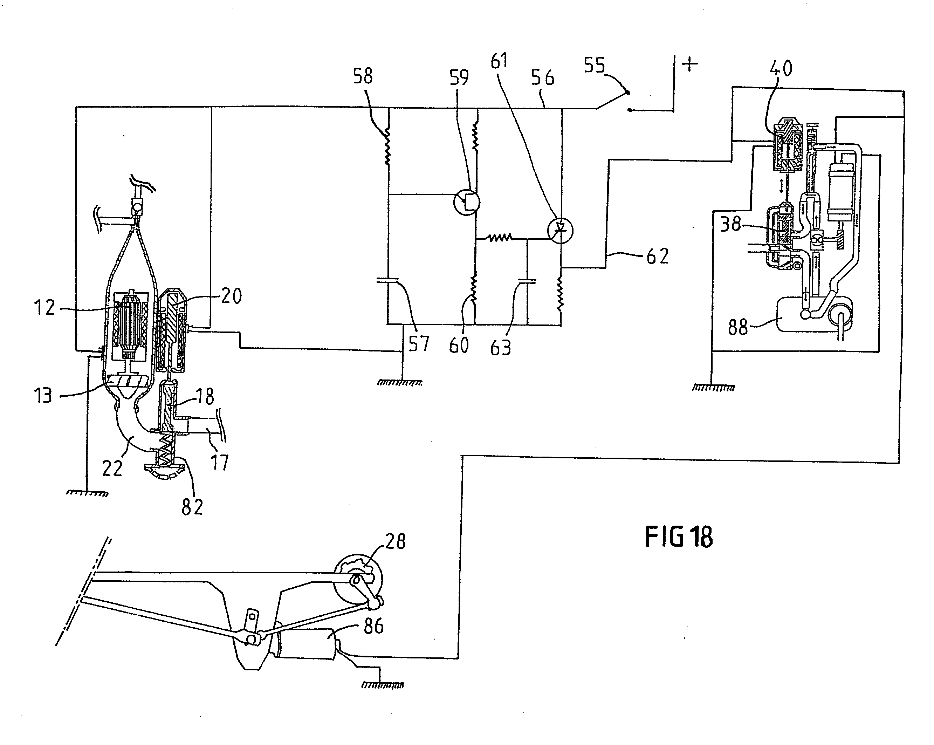

L'opération de dégivrage est réglée par le montage électronique représenté à la figure 18.

Comme expliqué plus haut, cette opération doit se dérouler en trois temps. Il est tout d'abord nécessaire de dégager les raclettes en élastomère de la place collée contre elles avant de provoquer le soulèvement des balais pour éviter l'arrachement desdites raclettes ; il faut ensuite soulever ces balais pour placer les raclettes au-dessus de la couche de glace, et enfin il faut mettre en mouvement ces balais qui déplaceront le souffle d'air chaud sur toute la surface à dégivrer, étant entendu que cette mise en mouvement fait immédiatement suite au soulèvement.

A cette fin le montage électronique comprend un conacteur 55 permettant l'alimentation d'un circuit direct 56 qui met aussitôt en service la soufflerie dont le moteur est commandé pour sa plus grande vitesse de rotation, et il fait agir l'électro-aimant 20 sur le tiroir 18 pour que l'air soit aspiré principalement dans le manchon 80 entourant le collecteur d'échappement du moteur. Cet air chaud va faire fondre la glace se trouvant au contact des raclettes.

Le circuit 55 alimente en même temps un circuit de temporisation comportant un condensateur 57 qui se charge au travers d'une résistance 58. Lorsque la tension de charge de ce condensateur 57 atteint la tension de seuil d'un transistor unijonction 59, ce condensateur se décharge brusquement dans l'entrée de ce transistor 59, lequel devient alors conducteur pour un bref instant entre ses bases.

Cette conduction brève, transformée en tension par une résistance 60, délivre une impulsion dans la gachette d'un thyristor 61 qui, à son tour, entre en conduction.

Ce thyristor 61 alimente alors un circuit 62, lequel commande l'envoi, par le groupe de pompage, du fluide de pression dans les vérins qui soulèvent les porte-balais. Par ce même circuit, le moteur d'entraînement des porte-balais est mis sous tension.

Le montage est complété par des résistances de protection et, éventuellement, par un condensateur 63 empêchant l'amorçage intempestif du thyristor.

Le retard au soulèvement des balais et à leur mise en mouvement est déterminé par la durée de charge du condensateur 57 au travers de la résistance 58 et dépend des valeurs données à ces composants, lesquelles valeurs sont choisies en fonction du temps nécessaire pour décoller les raclettes de la couche de glace qui les entoure et qui peut être estimé entre 30 et 60 secondes selon les régions.

Toutefois la valeur donnée à la résistance doit toujours être fixée à une valeur ohmique supérieure à celle qui serait calculée pour obtenir le même délai à la température normale d'environ 20°C, cela pour tenir compte de la perte d'une partie de cette valeur ohmique par temps froid.

L'ensemble du dispositif selon l'invention peut être réalisé industriellement à un prix de revient compatible avec son incorporation aux équipements de voitures de catégorie moyenne.

En effet, les organes mécaniques peuvent aisément être réalisés en matière plastique moulée (y compris les carters des organes électriques) et les éléments électrique sont de faible puissance et de modèles tout à fait courants. L'ensemble de la fabrication n'exige aucune technique ni précision particulière.

Il est bien entendu que l'invention n'est pas limitée à la forme d'exécution décrite et représentée. En particulier, si l'invention a été décrite en se référant à des essuie-glace montés pivotants au voisinage du bas du pare-brise, elle pourrait tout aussi bien être appliquée à des essuie-glace montés pivotants au voisinage du haut du pare-brise, comme ce peut-etre le cas dans certains autobus ou poids lourds. Dans ce cas, l'orifice 92 serait situé au voisinage de l'extrémité de plus petite course du balai et les modifications à effectuer en conséquence sont à la portée de l'homme de métier.

**Revendications**

1. - Dispositif de dégivrage des pare-brise véhicules autombiles comportant :
- au moins un essuie-glace constitué d'un porte-balai (71) et d'un balai (73), ledit porte-balai (71) étant monté, à l'une de ses extrémités, sur un arbre (24) susceptible d'être animé d'un mouvement de pivotement alternatif, et ledit balai (73) étant garni d'une raclette portant une paire de lames (4, 5) en un matériau élastomère formant, avec leur support (7), les parois en U d'un canal (6) ouvert vers le pare-brise,
- une ensemble d'alimentation en air comprenant une turbine (13) aspirant de l'air en au moins un point d'extraction et un conduit (1) débouchant entre la paire de lames (4,5) au voisinage de l'extrémité de plus grande course dudit balai (73), et
- des moyens (27) adaptés à écarter lesdites lames dudit pare-brise,
**caractérisé en ce que** lesdits moyens (27) adaptés à écarter lesdites lames du pare-brise agissent par poussée axiale sur l'arbre de pivotement (24) dudit porte-balai (71), ledit arbre (24) étant ainsi déplaçable entre une position abaissée pour laquelle lesdites lames (4,5) reposent sur le pare-brise et une position relevée pour laquelle lesdites lames (4,5) sont écartées du pare-brise en conservant leur orientation sensiblement parallèle audit pare-brise.

2 - Dispositif selon la revendication 1, dans lequel le mouvement de pivotement alternatif est transmis à l'arbre de pivotement (24) par l'intermédiaire d'une bielle (29) réunie à un arbre moteur, caractérisé en ce que l'extrémité de ladite bielle (29) opposée à l'arbre moteur forme une bague dans laquelle est enfilé l'arbre de pivotement (24), la périphérie interne de la bague et la périphérie externe dudit arbre présentant chacune au moins une portion de surface non circulaire et complémentaire (26, 85), assurant un blocage en rotation de l'arbre (24) par rapport à la bielle (29) tout en autorisant un coulissement axial entre eux.

3 - Dispositif selon la revendication 2, caractérisé en ce que l'extrémité de l'arbre de pivotement (24) opposée au porte-balai (71) est montée dans un palier (84) rendu solidaire d'un piston (27) appartenant à un vérin (86) coaxial audit arbre (24).

4 - Dispositif selon l'une quelconque des revendications 1 à 3, adapté au lavage des pare-brise de véhicules automobiles et comportant un ensemble d'alimentation en liquide de lavage comprenant un réservoir de liquide (76) et une pompe (90) reliée fonctionnellement audit réservoir (76) et audit conduit (1), caractérisé en ce que :

- l'extrémité de plus grande course dudit balai (73) est munie d'un embout (2) réuni de manière étanche, d'une part, audit conduit (1) et, d'autre part, audit canal (6),

- le conduit (1) communique avec le canal (6) par un passage coudé (3) inversant la direction d'acheminement du liquide de lavage ou de l'air, lequel passage (3) débouche par un orifice (92) sur la face inférieure de l'embout,

- ladite face inférieure est munie d'une paire de lamelles (10) disposées en un V dont la pointe est située au voisinage immédiat dudit orifice (92), à l'opposé dudit canal (6) et

- lesdites lamelles (10) sont susceptibles d'être engagées et immobilisées de manière étanche entre les lames (4,5) définissant le canal (6).

5 - Dispositif selon l'une quelconque des revendications 1 à 4, caractérisé en ce que les lames (4,5) de ladite paire sont attenantes, à leur partie supérieure, à un plateau de basculement (7) qui leur est commun, et en ce qu'elles oscillent autour d'un pont de matière qui leur est également commun et qui forme pivot de flexion (8).

6 - Dispositif selon l'une quelconque des revendications 1 à 5, caractérisé en ce que la turbine (13) est susceptible d'être reliée :

- soit à un "premier" point d'extraction (81) situé hors du voisinage immédiat du moteur du véhicule,

- soit à un "second" point d'extraction (17) appartenant à des moyens de traitement thermique (80), situés près du ou des tuyaux d'évacuation des gaz de combustion du moteur du véhicule, lesquels moyens thermiques communiquent, d'une part, avec le milieu ambiant au voisinage immédiat du moteur et, d'autre part, avec la turbine,

- soit simultanément aux premier et second points d'extraction dans un rapport prédéterminé,

le choix entre ces possiblités étant effectué au moyen d'un sélecteur constitué par un distributeur à tiroir (18), commandé par un électro-aimant (20), et mettant en relation ladite turbine (13) soit avec le premier point d'extraction (81), soit avec le second (17), soit avec les deux dans des rapports prédéterminés.

7 - Dispositif selon la revendication 6, caractérisé en ce que lesdits moyens de traitement thermique sont constitués par un manchon (80) entourant le ou les tuyaux (77) évacuant les gaz de combustion du moteur du véhicle, lequel manchon renferme des moyens retardateurs d'écoulement (93,94) qui ralentissent la vitesse à laquelle l'air parcourt le manchon au travers desquels il est extrait par la turbine et donc prolonge la durée de l'échange thermique.

8 - Dispositif selon la revendication 6 ou 7, caractérisé en ce qu'il comporte un montage électronique comprenant un circuit temporisateur (57-62) et commandant, lorsque l'usager déclenche le dégivrage du pare-brise, l'excitation de l'électro-aimant du distributeur à tiroir pour obtenir une mise en relation de la turbine (13) de l'ensemble d'alimentation en air au moins principalement avec le second point d'extraction (17), l'actionnement de ladite turbine (13), puis après un temps de latence réglé par ledit circuit temporisateur (57-62), l'actionnement du vérin de soulèvement du porte-balai (71) et la mise em marche du moteur assurant son pivotement alternatif.

9 - Dispositif selon l'une quelconque des revendications 6 à 8, caractérisé en ce qu'il comporte un montage électronique comprenant un circuit temporisateur (41-51) et commandant, lorsque l'usager déclenche le lavage du pare-brise, d'une part, l'actionnement de la pompe (90) de l'ensemble d'alimentation en liquide de lavage, avec pour conséquence l'injection dudit liquide dans ledit canal (6) via ledit conduit (1) et, d'autre part, la mise en marche du moteur provoquant le mouvement de pivotement alternatif du porte-balai (71) puis, lorsque l'usager interrompt l'opération de lavage, outre l'arrêt de la pompe (90), d'une part, l'actionnement automatique, et pendant un temps prédéterminé, de la turbine (13) de l'ensemble d'alimentation en air, reliée au moins principalement au premier point d'extraction (81), avec pour conséquence la vidange totale dudit conduit (1) et, d'autre part, après un temps de latence réglé par le circuit temporisateur (41-51), l'arrêt du moteur assurant le mouvement de pivotement alternatif dudit porte-balai (71).

10 - Dispositif selon l'une quelconque des revendications 1 à 9, caractérisé en ce qu'il comporte un montage électronique commandant, lorsque l'usager déclenche le désembuage du pare-brise, l'actionnement de la turbine (13) de l'ensemble d'alimentation, reliée au moins principalement au premier point d'extraction (81), et le pivotement alternatif du porte-balai (71).

FIG1

FIG3  →FIG2  ←FIG4

←FIG6  FIG7  FIG5

FIG8

FIG9

0263007

FIG11a    FIG11b

18    18

FIG10    17

80

17    93    94    77

FIG12    2    3

6

FIG13a

23

FIG13b

23    14

. 0263007

FIG14

FIG15

0263007

FIG16

FIG17

FIG 18

# RAPPORT DE RECHERCHE EUROPEENNE

Numero de la demande

EP 87 40 2034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | PATENT ABSTRACTS OF JAPAN, vol. 10, no. 25 (M-450)[2082], 31 janvier 1986; & JP-A-60 183 250 (JIYUNICHI MIYAGAWA) 18-09-1985 * Résumé * | 1,4,5 | B 60 S   1/02 |
| D,A | US-A-3 447 186  (SENKEWICH et al.) * Colonne 1, lignes 41-60; colonne 2, ligne 60 - colonne 3, ligne 51; figure 22 * | 1,4,6 | |
| A | PATENT ABSTRACTS OF JAPAN, vol. 10, no. 29 (M-451)[2086], 5 février 1986; & JP-A-60 185 658 (ISEKI NOKI K.K.) 21-09-1985 * Résumé * | 1 | |
| A | FR-A-1 552 135  (RICHARD) * En entier * | 1,4,5 | |
| D,A | FR-A-2 329 481  (SAINT-JAL) * Page 1, lignes 25-32; page 3, ligne 5 - page 4, ligne 22; figures 2,3 * | 1,4,5 | DOMAINES TECHNIQUES RECHERCHES (Int. Cl.4) |
| D,A | GB-A-  402 189  (SUTHERLAND et al.) * Page 1, ligne 55 - page 2, ligne 8,55-82; figure 1 * | 1,6,7 | B 60 S |
| A | DE-A-2 848 742  (SCHOLL) * Figure 2 * | 7 | |
| A | FR-A-1 271 508  (BIGNON) * Page 1, colonne de droite, lignes 27-40; page 2, colonne de gauche, ligne 16 - colonne de droite, ligne 4; figures 3,8,9 * | 1,4 | |

Le présent rapport a été établi pour toutes les revendications

| Lieu de la recherche | Date d'achèvement de la recherche | Examinateur |
|---|---|---|
| LA HAYE | 23-12-1987 | CLASEN M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)